# EUROPÄISCHE PATENTANMELDUNG

(11) **EP 1 760 047 A2**
(43) Veröffentlichungstag der Anmeldung: **07.03.2007**
(21) Anmeldenummer: 06017743.3
(22) Anmeldetag: 25.08.2006
(51) Int. Cl.: C02F 11/04, C02F 3/12, C02F 3/28, C02F 103/20, C02F 103/32

(54) **Verfahren und Vorrichtung zur Aufbereitung von verunreinigtem Abwasser, insbesondere zur Verwertung von Klärschlamm**

(30) Priorität: 29.08.2005 DE 102005040849
(71) Anmelder: U.T.S. Umwelt-Technik-Süd GmbH, 84419 Obertaufkirchen (DE); IWE- Ingenieurgesellschaft für Wasser und Entsorgung mbH, 01445 Radebeul (DE); Stowasser, Werner, 04741 Roßwein (DE)
(72) Erfinder: Friedrich, Eberhard Dr., 01445 Radebeul (DE); Stowasser, Werner, 04741 Roßwein (DE); Bürger, Adam, 84405 Grüntegernbach (DE)
(74) Vertreter: Liebl, Thomas

(57) **Zusammenfassung**

Die Erfindung betrifft ein Verfahren und eine Vorrichtung zur Aufbereitung von verunreinigtem Abwasser, insbesondere zur Verwertung von Klärschlamm aus Kläranlagen, bei dem das einer Kläranlage, insbesondere einer kommunalen Kläranlage, zugeführte und verunreinigte Abwasser einer Rechenstation der Kläranlage zugeführt wird. Erfindungsgemäß ist der Rechenstation (4) wenigstens ein Fermenter (16; 31, 32, 33, 34) einer Biogasanlage (17; 35) nachgeschaltet, in den eine vorgegebene Menge einer stromab der Rechenstation (4) abgezogenen Abwasser- und/oder Klärschlammcharge (12, 13, 28; 36) zusammen mit einer vorgegebenen Menge einer Biomasse-Feststoffcharge (29; 38) aus pflanzlichen und/oder tierischen Abfällen und/oder nachwachsenden Rohstoffen eingebracht und dort anaerob vergoren wird. Die Menge und Zusammensetzung der Abwasser- und/oder Klärschlammcharge (12, 13, 28; 36) einerseits und der Biomasse-Feststoffcharge (29; 38) andererseits wird in Abhängigkeit von der Schadstoffkonzentration der Abwasser- und/oder Klärschlammcharge (12, 13, 28; 36) so vorgegeben, dass das ausgegorene Gemisch (27) aus Abwasser und/oder Klärschlamm einerseits sowie Biomasse-Feststoffen andererseits vorgegebene Schadstoffgrenzwerte unterschreitet.

## Beschreibung

Die Erfindung betrifft eine Verfahren zur Aufbereitung von verunreinigtem Abwasser, insbesondere zur Verwertung von Klärschlamm nach dem Oberbegriff des Anspruchs 1 sowie eine Vorrichtung zur Durchführung des Verfahrens nach dem Oberbegriff des Anspruchs 27.

Bevor verunreinigte Abwässer in offene Gewässer eingeleitet werden können, müssen diese gereinigt werden. Dies geschieht mit als Kläranlagen bezeichneten Abwasserreinigungsanlagen, in denen das Abwasser mehrere Reinigungsstufen durchläuft. Kläranlagen werden regelmäßig von Kommunen bzw. Gemeinden als sogenannte kommunale Kläranlagen betrieben, mit denen im Wesentlichen Hausabwässer aber auch weniger stark verschmutzte Industrieabwässer gereinigt werden.

Konkret unterteilt sich die Reinigung des Abwassers in der Regel in eine mechanische, eine biologische sowie gegebenenfalls eine chemische Reinigungsstufe. So werden in der groben mechanischen Reinigung mittels einer Rechenstation, die Grob- und Feinrechen aufweist, grobe Sperrstoffe, wie z. B. Büchsen, Steine, Fäkalstoffe, Damenbinden, Toilettenpapier, aber auch Laub zurückgehalten. Schwere Sinkstoffe, wie z. B. Sand, Steine, Glassplitter etc., werden anschließend in einem als Sandfang bezeichneten Absetzbecken abgesetzt. Dem Sandfang nachgeschaltet ist ein Vorklärbecken, in dem sich dann ebenfalls unter dem Einfluss der Schwerkraft die Feststoffpartikel absetzen, die den Sandfang passieren und in der Regel einen höheren organischen Anteil aufweisen. In den Vorklärbecken verweilen die Abwässer für mehrere Stunden, wobei der in den Vorklärbecken anfallende Vorklärschlamm mit geeigneten Vorrichtungen entnommen und einer Weiterbehandlung zugeführt wird. An das Vorklärbecken schließt sich regelmäßig das Belebtschlamm- oder Belebungsbecken an, in dem das Abwasser mit Bakterienschlamm versetzt wird, der durch Gebläse belüftet wird und der in einem sich an das Belebungsbecken anschließenden Nachklärbecken sedimentiert. Vom Nachklärbecken aus wird der abgesetzte Schlamm als Rücklaufschlamm zum Belebungsbecken zurückgeführt. Der nicht benötigte Teilstrom wird als Überschussschlamm ebenfalls der Weiterbehandlung zugeführt.

In größeren Kläranlagen wird der sich im Vorklärbecken absetzende Schlamm in Faultürmen weiterbehandelt. Dazu wird der Schlamm voreingedickt und im Faulturm durch anaerobe Bakterien ausgefault. Der Faulschlamm wird dann konditioniert und gegebenenfalls nochmals eingedickt, bevor er einer maschinellen Entwässerung zugeführt wird. Der entwässerte Schlamm wird schließlich entsorgt.

Grundsätzlich können diese Klärschlämme als Dünger in der Landwirtschaft eingesetzt werden. Aufgrund der zum Teil sehr hohen Schadstoffbelastung der Klärschlämme durch Schwermetalle und andere organische Verbindungen ist dies jedoch oftmals nur eingeschränkt oder gar nicht möglich, so dass diese Klärschlämme entweder auf Deponien gelagert oder in Verbrennungsanlagen verbrannt werden müssen. Andererseits stehen Deponien und Verbrennungskapazitäten auch nur beschränkt zur Verfügung. Die Entsorgung von Klärschlamm ist daher extrem teuer und ein erheblicher Kostenfaktor für Kommunen.

Des weiteren sind Biogasanlagen allgemein bekannt, in denen ein anaerober Fermentationsprozess abläuft, bei dem organische Stoffe, wie z. B. nachwachsende Rohstoffe, Stalldung, Jauche, Maissilage etc. vergast werden. Dieser Fermentationsprozess findet in einem Fermenterbehälter statt, in dem die organischen Stoffe mit Flüssigkeit versetzt werden und der Fermentations- bzw. Vergasungsprozess durch Mikroorganismen durchgeführt wird. Die bei der Fermentation entstehenden Biogase sammeln sich in einem oberen Fermenterbehälterbereich und können direkt zur Energieerzeugung verwendet werden, z. B. als Heizgas zur Stromerzeugung in nachgeschalteten Brennkraftmaschinen mit Elektrogeneratoren. Solche Biogasanlagen zur Fermentation von organischen Stoffen finden meist in der dezentralen Verarbeitung und Verwertung von Biomasse im landwirtschaftlichen Bereich Verwendung.

Aufgabe der Erfindung ist es, ein Verfahren und eine Vorrichtung zur Aufbereitung von verunreinigtem Abwasser zu schaffen, mit dem bzw. der eine umweltfreundliche Aufbereitung und Wiederverwertung von verunreinigten Abwässern, insbesondere von Klärschlämmen auf einfache Weise möglich ist.

Diese Aufgabe wird bezüglich des Verfahrens gelöst mit den Merkmalen des Anspruchs 1.

Gemäß Anspruch 1 ist der mechanischen Reinigungsstation, insbesondere einer Rechenstation wenigstens ein Fermenter einer Biogasanlage nachgeschaltet, in dem eine vorgegebene Menge einer stromab der mechanischen Reinigungsstation abgezogenen Abwasser- und/oder Klärschlammcharge aus kommunalen Abwasser-Kläranlagen zusammen mit einer vorgegebenen Menge einer Biomasse-Feststoffcharge aus pflanzlichen und/oder tierischen Abfällen und/oder nachwachsenden Rohstoffen zur anaeroben Vergärung eingebracht wird, wobei die Menge und Zusammensetzung der Abwasser- und/oder Klärschlammcharge einerseits sowie der Biomasse-Feststoffcharge andererseits in Abhängigkeit von der Schadstoffkonzentration der Abwasser- und/oder Klärschlammcharge so vorgegeben wird, dass das ausgegorene Biomasse/Klärschlamm-Gemisch vorgegebene Schadstoffgrenzwerte unterschreitet.

Mit einer derartigen Verfahrensführung lässt sich eine besonders umweltfreundliche Aufbereitung und Wiederverwertung von verunreinigten Abwässern bzw. Klärschlämmen auf einfache Weise durchführen, da je nach konkreter Verfahrensführung das Abwasser entweder direkt in einen Fermenter einer Biogasanlage geleitet wird oder aber auch Klärschlamm bzw. eine Kombination aus Klärschlamm und verunreinigtem Abwasser in einen Fermenter einer Biogasanlage zudosiert und somit umweltfreundlich aufbereitet werden kann. Besonders vorteilhaft wird durch die anaerobe Vergärung auch in einem gewissen Umfang eine chemische bzw. biologische Umwandlung bzw. Zersetzung bestimmter Verunreinigungen möglich, was wesentlich dazu beiträgt, die Schadstoffkonzentration im ausgegorenen Gemisch zu verringern, so dass dieses als z. B. Dünger in der Landwirtschaft eingesetzt werden kann.

Die weiteren Vorteile der Erfindung werden nachfolgend noch näher in Verbindung mit den bevorzugten Verfahrensführungen und Ausgestaltungen deutlich:

So ist besonders bevorzugt vorgesehen, dass der vorzugsweise durch eine mechanische Reinigungsstation gebildeten Rechenstation ein Sandfang nachgeschaltet ist, dem wiederum der wenigstens eine Fermenter der Biogasanlage nachgeschaltet ist. Durch dieses Vorsehen eines Sandfangs können vorteilhaft noch weitere grobe, absetzbare Verunreinigungen, wie beispielsweise Sand, Steine, Glassplitter etc., aus dem Abwasser entfernt werden, bevor dieses dann in die Biogasanlage eingebracht wird. Mit dieser Maßnahme lassen sich somit nochmals vorteilhaft auch ein Großteil derjenigen Verunreinigungen beseitigen, die den Wirkungsgrad der Fermentation einer Biogasanlage beeinträchtigen können.

Gemäß einer weiteren Verfahrensführung ist vorgesehen, dass die Zudosierung der Abwasser- und/oder Klärschlammcharge einerseits und der Biomasse-Feststoffcharge andererseits so vorgegeben ist, dass in dem Fermenter ein Gemisch mit einem Trockensubstanzgehalt von kleiner als 20% Trockensubstanz, vorzugsweise von kleiner 15% Trockensubstanz vorliegt. Der höchst bevorzugte Bereich liegt jedoch zwischen 8 bis 15% Trockensubstanz, da sich in diesem Bereich besonders gute Fermentations- und damit Aufbereitungsergebnisse erzielen lassen.

Grundsätzlich kann die Vorrichtung bzw. Kläranlage herkömmlicher Bauart sein, d. h., dass lediglich ein Teilstrom des nach der z. B. Rechenstation oder nach einem Sandfang anfallenden, vorgereinigten Abwassers in den wenigstens einen Fermenter der Biogasanlage eingebracht wird, während der restliche Teilstrom in herkömmlicher Weise in einem nachgeschalteten Vorklärbecken, Belebungsbecken und Nachklärbecken gereinigt wird.

Gemäß einer weiteren konkreten Verfahrensführung kann jedoch vorgesehen sein, dass die Kläranlage ohne mechanischen Reinigungseinrichtung bzw. der Rechenstation oder dem Sandfang nachgeschaltete Klärbecken ausgebildet wird dergestalt, dass sämtliches vorgereinigte Abwasser in den wenigstens einen Fermenter eingebracht wird, insbesondere unter Zwischenschaltung wenigstens eines Zwischenspeichers aus dem heraus das vorgereinigte Abwasser dem wenigstens einen Fermenter mittels einer Zuführeinrichtung, wie z. B. einer Pumpeinrichtung, zudosierbar ist. Insbesondere bei sehr großen Abwassermengen kann vorgesehen sein, dass gegebenenfalls auch ohne Zwischenschaltung eines Zwischenspeichers eine Mehrzahl von kaskadenartig angeordneten Fermenterbehältern vorgesehen ist, um die Abwassermenge zu bewältigen. Im Falle einer Zwischenspeicherung in einem Speicherbehälter kann z. B. auch vorgesehen sein, dass der Speicherbehälter mit solchen Messeinrichtungen ausgestattet ist, die ein exaktes Zudosieren und/oder Abziehen einer Abwassercharge in den Speicherbehälter hinein bzw. aus diesem heraus ermöglichen. Dies kann z. B. mittels volumetrischer Messeinrichtungen oder aber auch mittels Wägeeinrichtungen erfolgen. Mit einer derartigen Kläranlagenführung kann somit eine besonders umweltfreundliche Aufbereitung von verunreinigtem Abwasser erfolgen.

Alternativ dazu ist die Verfahrensführung aber bevorzugt so gewählt, dass in den wenigstens einen Fermenter eine vorgegebene Menge an Klärschlamm eingebracht wird, wobei als Klärschlamm bevorzugt der sich nach einer mechanischen Reinigungsstation, insbesondere einer Recheneinheit, oder einem Sandfang der Kläranlage aus dem Abwasser absetzende Schlamm eingesetzt wird, der insbesondere einem Vorklärbecken entnommen wird. Grundsätzlich kann jedoch auch als Klärschlamm der aus dem Belebungsbecken oder einem Nachklärbecken abgezogene Schlamm verwendet werden. Gegebenenfalls kann auch aus dem Sandfang abgesetztes Sandfangsediment und/oder aus einem dem Sandfang zugeordneten Fett- und Ölabscheidebecken abgeschiedenes Fett und Öl dem Fermenter, bevorzugt gemischt mit Klärschlamm zugeführt werden. In diesem Fall braucht dann der Klärschlamm nicht kostenintensiv in Deponien oder Verbrennungsanlagen entsorgt zu werden, sondern kann in Form des in dem Fermenter ausgegorenen Gemisches als für die Landwirtschaft geeigneter, hochwertiger Dünger wiederverwertet werden. Dadurch ergibt sich ein sehr hohes Einsparpotential insbesondere für Kommunen und ländliche Gemeinden. Insbesondere in Gegenden mit einem sehr geringen Viehbesatz pro Hektar landwirtschaftlicher Fläche wird somit eine Möglichkeit geschaffen, die landwirtschaftliche Fläche auf natürliche Weise zu düngen. Ein weiterer wesentlicher Vorteil liegt darin, dass der regelmäßig einen sehr hohen Flüssigkeitsanteil aufweisende und damit fließfähige Klärschlamm sich sehr gut eignet, um in Verbindung mit der regelmäßig einen demgegenüber sehr niedrigen Flüssigkeitsgehalt aufweisenden Biomasse aus nachwachsenden Rohstoffen oder pflanzlichen Abfällen, aber auch tierischen Abfällen, die einen sehr hohen Feststoffanteil aufweisen bzw. reine Biomasse-Feststoffe sind, einen Substratmix im Fermenterbehälter zur Verfügung zu stellen, der die für einen hohen Gasausbeute-Wirkungsgrad der Biogasanlage optimale Feststoff/Flüssigkeit-Zusammensetzung aufweist.

Insbesondere für den Fall, dass die Gefahr eines zu hohen Feststoffanteils gegeben ist, kann vorgesehen sein, in den Fermenter zusätzlich zum Klärschlamm und den Biomasse-Feststoffen eine vorgegebene Menge an zusätzlicher Flüssigkeit zuzudosieren. Bevorzugt wird als zusätzliche Flüssigkeit ohnehin in einer Kläranlage vorliegendes vorgereinigtes und/oder gegebenenfalls auch bereits gereinigtes Abwasser zudosiert. Die Zudosierung der zusätzlichen Flüssigkeit erfolgt dabei entweder in den Fermenterbehälter hinein, vorzugsweise in Verbindung mit einer Messeinrichtung, beispielsweise einer Volumenmesseinrichtung oder einer Durchflussmesseinrichtung, um die zudosierte Menge genau zu bestimmen. Alternativ und bevorzugt wird eine zusätzliche Flüssigkeit, wie vorzugsweise vorgereinigtes und/oder gereinigtes Abwasser aus der Kläranlage, dem Klärschlamm vor dem Fermenter zugeführt bzw. zugemischt, z. B. in einen Klärschlamm-Speicherbehälter hinein zudosiert, in dem dann eine Vermischung mit dem Klärschlamm, z. B. mittels einer dort vorhandenen Rühreinrichtung, erfolgt. In diesem Fall kann dann über den Klärschlamm-Speicherbehälter eine genau dosierte Abwasser-/Klärschlammcharge in den Fermenterbehälter zudosiert werden, so dass lediglich eine Messeinrichtung in Verbindung mit dem Klärschlamm-Speicherbehälter erforderlich ist, mittels der sowohl die Zudosierung der zusätzlichen Flüssigkeit, also beispielsweise des vorgereinigten oder gereinigten Abwassers, in den Speicherbehälter hinein als auch, wie eben beschrieben, der Abzug des Gemisches aus dem Speicherbehälter genau kontrolliert werden kann. Die Verwendung des vorgereinigten bzw. gereinigten Abwassers als zusätzliche Flüssigkeit bietet sich hier an, da es ohnehin in der Kläranlage vorhanden ist. Grundsätzlich könnte jedoch auch eine andere Flüssigkeit zudosiert werden, so z. B. Rinder- oder Schweinegülle.

Mit einer somit vorzugsweise vorhandenen Klärschlamm-Speichereinrichtung kann somit grundsätzlich sichergestellt werden, dass zu denjenigen Zeiten, in denen eine Zudosierung einer Klärschlammcharge in einen Fermenter einer Biogasanlage erforderlich ist, eine ausreichende Menge an Klärschlamm zur Verfügung steht. Grundsätzlich könnte als Klärschlamm-Speichereinrichtung auch ein Becken der Kläranlage selbst verwendet werden, also z. B. der Klärschlamm direkt aus dem Vorklärbecken abgepumpt werden. In diesem Fall befindet sich die Biogasanlage bevorzugt in unmittelbarer Nähe der kommunalen Kläranlage bzw. ist Bestandteil derselben. Alternativ zu diesem Beckenspeicher und insbesondere auch in Verbindung mit entfernt von der Kläranlage angeordneten, dezentralen Biogasanlagen, ist die Klärschlamm-Speichereinrichtung durch wenigstens einen benachbart zum Fermenter der Biogasanlage angeordneten vorzugsweise gas- und flüssigkeitsdichten Klärschlamm-Speicherbehälter als Zwischenspeicher gebildet, aus dem heraus die Klärschlammcharge mittels einer Pumpeinrichtung in den Fermenter gepumpt wird. Dieser Klärschlamm-Speicherbehälter kann hier beispielsweise mit einer Wägeeinrichtung gekoppelt sein, mittels der dann die vom Klärschlamm-Speicherbehälter abgezogene Menge der Klärschlammcharge bzw. Abwasser/Klärschlammcharge auf einfache Weise abgewogen werden kann und ebenso eine genaue und exakte Zudosierung der jeweiligen Charge in den Fermenter der Biogasanlage hinein erfolgen kann. Alternativ dazu kann hier aufgrund des regelmäßig sehr hohen Flüssigkeitsanteils der Charge die Menge der Charge aber auch mittels einer Durchflussmessung mittels Durchflussmessgeräten oder mittels einer Volumenmessung, z. B. mittels Volumenzählern, ermittelt werden.

Bevorzugt ist in einem derartigen Klärschlamm-Speicherbehälter auch wenigstens eine Rühreinrichtung angeordnet, mittels der vor dem Abziehen einer Klärschlammcharge der Behälterinhalt für eine vorgegebene Zeitdauer vermischt und verrührt wird, um pro Abwasser- und/oder Klärschlammcharge eine im Wesentlichen gleiche Zusammensetzung zur Verfügung zu stellen.

Auch die aus pflanzlichen und/oder tierischen Abfällen und/oder nachwachsenden Rohstoffen zusammengesetzte Biomasse wird bevorzugt in einer als Zwischenspeicher ausgebildeten Biomasse-Speichereinrichtung zwischengespeichert, aus der heraus dann die vorgegebene Biomassemenge mittels einer Zuführeinrichtung dem Fermenter zudosiert wird. Auch diese Biomasse-Speichereinrichtung, z. B. ein offener Mischbehälter mit einer Mischeinrichtung im Inneren, kann mittels einer Messeinrichtung, insbesondere einer Wägeeinrichtung, wie z. B. Wägedosen, gekoppelt sein, mittels der die von der Biomasse-Speichereinrichtung abgezogene Menge der Biomassecharge abgewogen wird. Mit einer derartigen Wägeeinrichtung kann sowohl ein genau definierter Biomasse-Substratmix aus pflanzlichen, tierischen oder nachwachsenden Rohstoffen in die Biomasse-Speichereinrichtung eindosiert werden, als auch die geforderte Menge der Biomasse in den Fermenter der Biogasanlage zudosiert werden.

Grundsätzlich bestünde in Verbindung mit derartigen Messeinrichtungen auch die Möglichkeit, die Abwasser- und/oder Klärschlammcharge und die Biomassecharge vor der Zudosierung in den Fermenterbehälter in der vorgegebenen Zusammensetzung zusammenzumischen und dann über eine gemeinsame Fördereinrichtung in den Fermenterbehälter, z. B. gewichtsgesteuert, einzudosieren. Insbesondere in Verbindung mit offenen Mischbehältern ergibt sich hier jedoch die Problematik einer Geruchsbelästigung, insbesondere durch die Abwasser- und/oder Klärschlammcharge, die bei einem gas- und flüssigkeitsdichten Klärschlamm-Speicherbehälter, aus dem heraus die Charge unmittelbar dem Fermenterbehälterinnenraum zugeführt wird, nicht gegeben ist.

Das ausgegorene Gemisch wird bevorzugt mittels einer Austragseinrichtung, z. B. einer Austragsschnecke oder einem Becherwerk oder dergleichen, aus dem Fermenterbehälter ausgetragen.

Als nachwachsende Rohstoffe werden für die Biomasse insbesondere Ackerbaufrüchte und/oder Getreide und/oder Gras, Mais etc. verwendet. Unter pflanzlichen bzw. tierischen Abfällen werden z. B. Maissilage, Schweine-, Rinder- oder Hühnermist, Speiseabfälle und dergleichen verstanden.

Gemäß einer weiteren bevorzugten Verfahrensführung weist die Kläranlage ferner wenigstens einen Sandfangsediment-Aufbereitungsbehälter auf, in den eine vorgegebenen Menge der im Sandfang anfallenden Sandfangsedimente zusammen mit einer vorgegebenen Menge an sedimentspezifischen Bakterien, insbesondere aeroben Bakterien, für eine vorgegebene Verweilzeit zur Aufbereitung des Sandfangsedimentes insbesondere chargenweise eingebracht wird. Durch eine derartige erfindungsgemäße Verfahrensführung kann das im Sandfang anfallende Sandfangsediment, das insbesondere Sand als Bestandteil aufweist, so aufbereitet werden, dass die Sandfangsedimente und insbesondere der Sand einer Wiederverwertung, z. B. als Bausand oder dergleichen, zugeführt werden kann. Die kostenaufwändige Entsorgung über z. B. Deponien kann dadurch vorteilhaft vermieden werden. Dadurch lassen sich insbesondere in Verbindung mit kommunalbetriebenen Kläranlagen die Kosten zum Betreiben einer derartigen Kläranlage, insbesondere im Hinblick auf die Entsorgungskosten für die anfallenden Abfallschlämme, die im weiteren Sinne hier auch die Sandfangsedimente umfassen sollen, vorteilhaft erheblich reduziert werden.

Grundsätzlich können sowohl aerobe als auch anaerobe Bakterien zur Sandfangsedimentaufbereitung eingesetzt werden, die kläranlagenunabhängig gezüchtet worden sind. Besonders bevorzugt werden jedoch die sedimentspezifischen, d. h. die für die Aufbereitung des Sandfangsedimentes geeigneten Bakterien aus dem ohnehin in der Kläranlage vorhandenen Belebtschlamm aus einer Belebtschlamm-Reinigungsstufe, insbesondere aus einem Belebtschlammbecken und/oder einem dem Belebtschlammbecken zugeordneten und nachgeschalteten Nachklärbecken, entnommen, so dass die Aufbereitung sehr effektiv und vor allem auch kostengünstig mit für die Aufbereitung hervorragend geeigneten Mikroorganismen analog zum herkömmlichen Belebtschlammbecken aerob durchgeführt werden kann. Äquivalent ist dies auch mit durch geschlossene Tanks gebildeten Bioreaktoren möglich. Die Zudosierung der Bakterien bzw. des Belebtschlammes einerseits und der Sandfangsedimente andererseits erfolgt hier bevorzugt chargenweise, je nach konkreten Gegebenheiten, z. B. dem Wirkungsgrad der Sandfangsedimentaufbereitung.

Der Sandfangsediment-Aufbereitungsbehälter kann grundsätzlich als separater Behälter zusätzlich zu einem Belebtschlammbecken ausgebildet sein, wobei der Sandfangsediment-Aufbereitungsbehälter bevorzugt offen ausgebildet ist, um die für eine aerobe Vergärung mittels dem Belebtschlamm erforderliche Luftatmosphäre gegebenenfalls zusätzlich zu einem Gebläse zur Verfügung zu stellen. Grundsätzlich könnte der Sandfangsediment-Aufbereitungsbehälter aber auch geschlossen ausgeführt sein, solange sichergestellt ist, dass ausreichend Luft bzw. Sauerstoff für die bevorzugte aerobe Vergärung mittels Belebtschlamm aus der Kläranlage zur Verfügung gestellt wird. Gemäß einer besonders bevorzugten Ausführungsform ist jedoch vorgesehen, dass der Sandfangsediment-Aufbereitungsbehälter direkt in ein Belebtschlammbecken integriert ist und dort durch eine mittels einer Trennwand von einem Belebungsbecken abgetrennte Aufbereitungskammer ausgebildet ist, die dann ein Aufbereitungsbecken beliebiger Geometrie ausbildet. Selbstverständlich können auch mehrere derartige Sandfangsediment-Aufbereitungsbehälter bzw. Aufbereitungsbecken in einer Kläranlage vorgesehen sein. Durch eine derartige integrale Lösung ergeben sich in besonders vorteilhafter Weise kurze Wege, um Belebtschlamm aus dem Belebungsbecken in das Aufbereitungsbecken zu fördern. Zudem lässt sich ein derartiger Aufbau besonders einfach mit relativ wenig Platzaufwand, z. B. als Betonkonstruktion, herstellen.

Um eine gute Durchmischung des bevorzugt Belebtschlamm-/Sandfangsediment-Gemisches in dem Sandfangsediment-Aufbereitungsbehälter zu erreichen, ist gemäß einer weiteren bevorzugten Ausgestaltung vorgesehen, in dem Sandfangsediment-Aufbereitungsbehälter wenigstens eine Misch- und/oder Rühreinrichtung anzuordnen, mittels dem das Gemisch durchmischt werden kann. Eine derartige Misch- und/oder Rühreinrichtung kann z. B. durch ein Rührwerk gebildet sein, wobei insbesondere ein explosionsgeschütztes hydraulisches oder pneumatisch betriebenes Rührwerk bevorzugt ist. Grundsätzlich könnte jedoch auch eine elektrisch betriebenes Rührwerk vorgesehen sein. Als Rührwerk eignet sich insbesondere Rührflügel oder aber auch Trommelmischeranordnungen, mittels denen eine sehr gute Durchmischung erfolgen kann.

Dem Sandfangsediment-Aufbereitungsbehälter ist weiter bevorzugt eine Austragseinrichtung, insbesondere eine Pumpeinrichtung oder eine Austragschnecke, zugeordnet, mittels der das sich im Sandfangsediment-Aufbereitungsbehälter absetzende und aufbereitete Sandfangsediment ausgetragen und einer Separator- und/oder Wascheinrichtung zur Absonderung und zum Waschen der gewünschten Sedimentbestandteile, insbesondere Sand, zugeführt werden kann. Der Belebtschlamm verbleibt hier vorzugsweise im Sandfangsediment-Aufbereitungsbehälter und wird nur dann "nachgesteuert", falls dies durch z. B. Belebtschlammverluste einerseits oder nachlassende Wirkung der Bakterien bzw. Mikroorganismen andererseits erforderlich ist.

Für einen guten Wirkungsgrad der aeroben Vergärung ist vorgesehen, dem Sandfangsediment-Aufbereitungsbehälter eine Belüftungs- und/oder Gebläseeinrichtung zuzuordnen, mittels der dem Sandfangsediment-Aufbereitungsbehälter gezielt und dosiert Luft und damit Sauerstoff zugeführt werden kann.

Bevorzugt weist die Belebtschlamm-Reinigungsstufe wenigstens eine einem Belebtschlammbecken und/oder einem Nachklärbecken zugeordnete und vorzugsweise mit einer Messeinrichtung gekoppelte Zudosiereinrichtung auf, die insbesondere durch eine Pumpeinrichtung gebildet ist, mittels der eine vorgegebene Menge des im Belebtschlammbeckens und/oder einem Nachklärbecken vorhandene bzw. anfallenden Belebtschlammes zu vorgegebenen Zeiten in den Sandfangsediment-Aufbereitungsbehälter zudosiert werden kann, was insbesondere und bevorzugt gesteuert mittels einer Steuereinrichtung erfolgt.

Ebenso kann dem Sandfang wenigstens eine vorzugsweise mit einer Messeinrichtung gekoppelte Zudosiereinrichtung, die insbesondere durch eine Pump- und/oder Austragseinrichtung gebildet ist, zugeordnet sein, mittels der eine vorgegebene Menge des im Sandfang anfallenden Sandfangsedimentes zu vorgegebenen Zeiten in den Sandfangsediment-Aufbereitungsbehälter zudosiert werden kann. Auch dies erfolgt bevorzugt gesteuert mittels einer Steuereinrichtung.

Gemäß einer besonders bevorzugten Ausgestaltung der Kläranlage, die auch separat beansprucht wird, weist die Kläranlage ferner eine Biogasanlage mit wenigstens einem Fermenter auf, deren Abwärme als Biogasanlagen-Abwärme wenigstens zum Teil in ein Belebtschlammbecken sowie gegebenenfalls in das Sandfangsediment-Aufbereitungsbecken der biologischen Reinigungsstufe eingekoppelt wird, um im jeweiligen Becken, insbesondere jedoch im Belebtschlammbecken eine vorgegebene Temperatur einzustellen. Die Abwärme wird bevorzugt von einer Temperaturen im Bereich von z. B. ca. 85°C aufweisenden Gasmotoreinheit der Biogasanlage abgezogen. Alternativ oder zusätzlich könnte die Abwärme aber auch aus einem Fermenter der Biogasanlage ausgekoppelt werden. Mit einer derartigen Wärmeeinkopplung wird vorteilhaft die Temperatur des Belebtschlammbeckens gegenüber einer herkömmlichen Belebtschlammbeckentemperatur erhöht, wodurch der Abbauprozess vorteilhaft beschleunigt werden kann, so dass eine ausreichende Menge an Belebtschlamm zur Verfügung steht, der zur Aufbereitung in den Sandfangsediment-Aufbereitungsbehälter eingesetzt werden kann.

Bevorzugt weist hierbei die Kläranlage eine Regelungseinrichtung auf, mittels der die Temperatur im Belebtschlammbecken geregelt werden kann, wobei im Bereich des Belebtschlammbeckens eine Messfühlereinrichtung zur Istwerterfassung angeordnet und eine Heizeinrichtung als Regelstrecke vorgesehen ist, mittels der die Biogasanlagen-Abwärme aus der Biogasanlage ausgekoppelt und in das Belebtschlammbecken eingekoppelt werden kann. Vorteilhaft ist zur Einkopplung der Biogasanlagen-Abwärme eine Wärmetauscheranordnung vorgesehen, die einen biogasanlagenseitigen ersten Wärmetauscher und einen belebtschlammbeckenseitigen zweiten Wärmetauscher aufweist und in denen ein Wärmetauschmedium in an sich bekannter Weise geführt ist. Als Wärmetauschmedium eignen sich insbesondere Flüssigkeiten, wie z. B. Wasser, das in entsprechenden Rohrleitungen geführt ist.

Bezüglich der Vorrichtung wird die Aufgabe gelöst mit den Merkmalen des Anspruchs 27. Die sich damit und auch mit den darauf rückbezogenen Unteransprüchen ergebenden Vorteile wurden bereits vorher in Verbindung mit der Verfahrensführung angegeben, so dass darauf an dieser Stelle nicht mehr näher eingegangen wird.

Die Erfindung wird nachfolgend anhand einer Zeichnung näher erläutert.

Es zeigen:
- Fig. 1: schematisch ein Fließschema einer kommunalen Kläranlage mit daran angeschlossener Biogasanlage,
- Fig. 2: schematisch ein Prinzipdarstellung eines Fermenters einer Biogasanlage mit zugeordneter Biomasse-Speichereinrichtung und Klärschlamm-Speicherbehälter,
- Fig. 3: ein Fließschema einer alternativen kommunalen Kläranlage, und
- Fig. 4: ein Fließschema einer weiteren alternativen kommunalen Kläranlage.

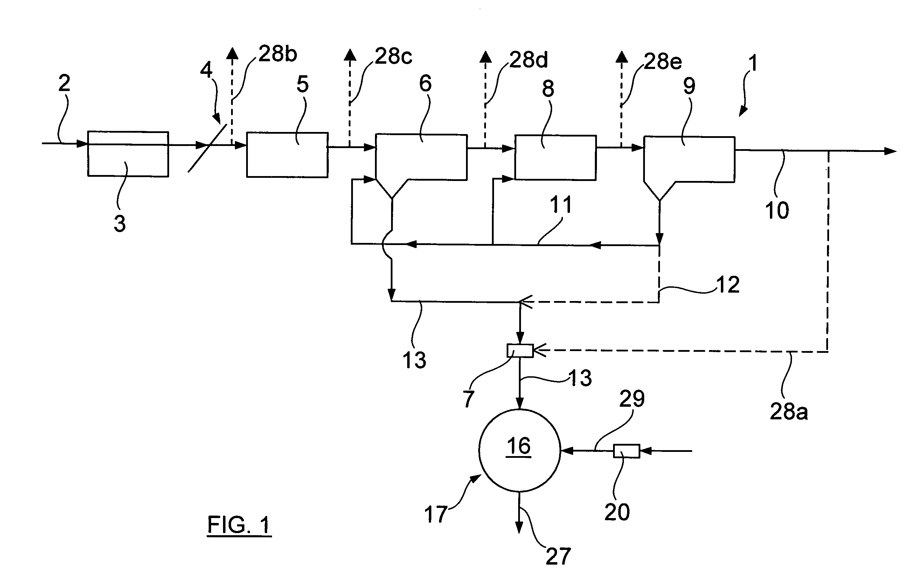

In der Fig. 1 ist schematisch eine erfindungsgemäße Kläranlage 1 gezeigt, die nach einem Abwasserzulauf 2 eine sogenannte Regenentlastung 3 aufweist, auf die hier nicht weiter eingegangen wird und die lediglich dazu dient, die Kläranlage 1 nicht hydraulisch zu überlasten. An die Regenentlastung 3 schließt sich eine Rechenstation 4 an, die in Strömungsrichtung des Abwassers gesehen zuerst einen hier nicht im Detail dargestellten Grobrechen und gegebenenfalls einen sich dahinter anschließenden Feinrechen aufweist, um grobe Sperrstoffe zurückzuhalten.

An die Rechenstation 4 schließt sich wiederum ein Sandfang 5 an, in dem sich die schweren Sinkstoffe, insbesondere Sand, aber auch Steine, Glassplitter etc., absetzen können. Dem Sandfang 5 ist ein Vorklärbecken 6 nachgeschaltet, durch das das verunreinigte Abwasser sehr langsam fließt, so dass sich ungelöste Stoffe, wie z. B. Fäkalstoffe, Papier, etc. absetzen können sowie gegebenenfalls auch an der Oberfläche aufschwimmen. Der sich im Vorklärbecken 6 absetzende Klärschlamm 13, der auch Vorklärschlamm oder Primärschlamm genannt wird, wird hier einem gas- und flüssigkeitsdichten Klärschlamm-Speicherbehälter 7 zugeführt, in dem der Klärschlamm 13 zwischengespeichert wird.

Dem Vorklärbecken 6 ist ein Belebungsbecken bzw. Belebtschlammbecken 8 nachgeschaltet, in dem das Abwasser mit Bakterienschlamm versetzt wird, der durch ein Gebläse belüftet wird. Dadurch können nunmehr die in dem verunreinigten Abwasser gelösten Verunreinigungen entfernt werden.

Ein dem Belebungsbecken 8 nachgeschaltetes Nachklärbecken 9 bildet eine Prozesseinheit mit dem Belebungsbecken 8, wobei im Nachklärbecken 9 der Bakterienschlamm bzw. Belebtschlamm durch Absetzen aus dem Abwasser abgetrennt wird, wodurch gereinigtes Wasser 10 vorliegt. Der im Nachklärbecken 9 abgesetzte Schlamm wird als sogenannter Rücklaufschlamm 11 hier wieder in Teilströmen zum Belebungsbecken 8 bzw. Vorklärbecken 6 zurückgeführt.

Wie dies in der Fig. 1 strichliert dargestellt ist, kann vom Rücklaufschlamm 11 auch ein Teilstrom 12 abgezweigt werden, der dann entweder alternativ oder zusätzlich zum Klärschlamm 13 dem Klärschlamm-Speicherbehälter 7 zugeführt und dort eingespeichert werden kann. Wie dies der Fig. 1 weiter entnommen werden kann, kann dem Klärschlamm-Speicherbehälter 7 auch ein Teilstrom 28a des gereinigten Wassers 10 zugeführt werden, um z. B. eine vorgegebene Verflüssigung eines Abwasser/Klärschlamm-Gemisches im Klärschlamm-Speicherbehälter 7 zu erreichen. Es handelt sich hier nur lediglich beispielhaft um bereits gereinigtes Wasser 10. Selbstverständlich können alternativ auch Abwasserströme vom Vorklärbecken 6 bzw. vom Belebungsbecken 8 etc. in beliebigen Kombinationen abgezogen werden, was in der Fig. 1 lediglich beispielhaft durch die strichlierten Stoffströme 28b bis 28e angedeutet ist.

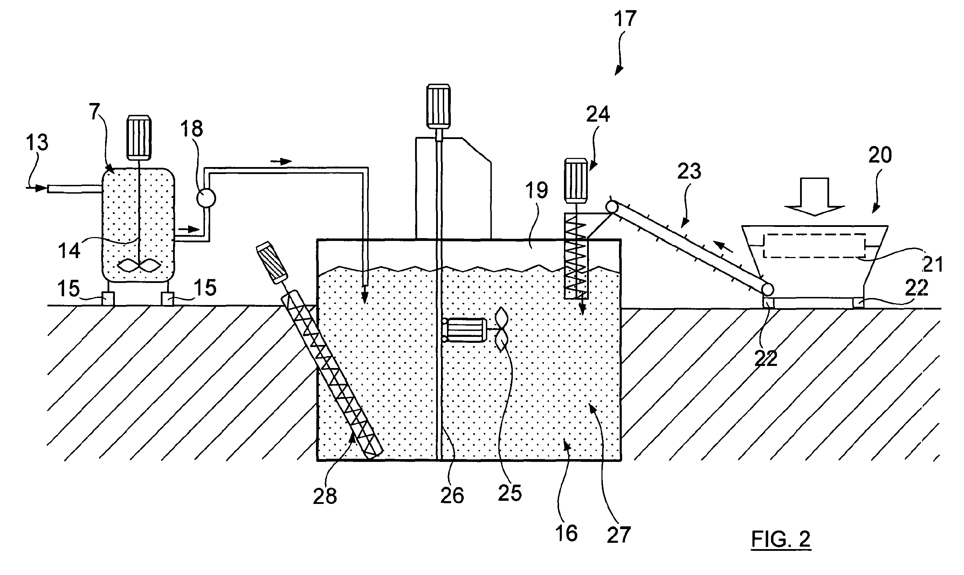

Wie dies insbesondere der Fig. 2 zu entnehmen ist, ist in dem Klärschlamm-Speicherbehälter 7 eine Rühreinrichtung 14 angeordnet und ist der Klärschlamm-Speicherbehälter 7 hier beispielhaft auf Wägedosen 15 als Wägeeinrichtung gelagert, mittels denen sowohl eine genaue Zudosierung von Klärschlamm 13 sowie gegebenenfalls auch Abwasser in den Klärschlamm-Speicherbehälter 7 als auch ein exaktes Abwiegen der aus dem Klärschlamm-Speicherbehälter 7 abgezogenen Klärschlammcharge für eine Zudosierung in einen Fermenter 16 einer Biogasanlage 17 möglich ist.

Die Zudosierung der Klärschlammcharge bzw. Abwasser/Klärschlammcharge in den Fermenter 16 erfolgt hier z. B. mittels einer Pumpe 18, wobei die Zuführung im Fermenter 16 unterhalb einer Gasphase 19 erfolgt, wodurch eine Gasdichtheit gewährleistet ist. Selbstverständlich sind die Rohrleitungen hier gasdicht durch die Behälterwandungen zu führen. Die Rühreinrichtung 14 wird vorzugsweise dann betätigt, wenn eine Zudosierung einer Klärschlammcharge bzw. Abwasser/Klärschlammcharge in den Fermenterbehälter 16 unmittelbar bevorsteht. Damit wird erreicht, dass eine stets in etwa gleiche Zusammensetzung einer Klärschlammcharge bzw. Abwasser/Klärschlammcharge in den Fermenterbehälter 16 zudosiert wird, da die im Klärschlamm enthaltenen unterschiedlichen Bestandteile, wie z. B. Feststoffe und Wasser, dann im dispergierten und nicht entmischten Zustand vorliegen.

Wie dies der Fig. 2 weiter entnommen werden kann, ist der Biogasanlage 17 bzw. dem Fermenter 16 ferner ein Biomasse-Mischbehälter 20 mit Mischwalzen 21 zugeordnet, in dem vorzugsweise Biomasse-Feststoffe, wie z. B. nachwachsende Rohstoffe und/oder pflanzliche und/oder tierische Abfälle, zwischengespeichert sind. Der Biomasse-Mischbehälter 20 ist hier ebenfalls beispielhaft auf Wägedosen als Wägeeinrichtung gelagert, so dass über die Fördereinrichtung 23 eine genau abgewogene Biomassecharge 29 (Fig. 1) in den Bereich einer Zudosierschnecke 24 gefördert werden kann, die gasdicht durch die Behälterwandung geführt ist und bei einer Schneckenbetätigung die Biomassecharge gas- und flüssigkeitsdicht unterhalb die Gasphase in den Fermenterbehälterinnenraum eindrückt. Ebenfalls ist mit den Wägedosen 22 eine genaue Zudosierung von Biomasse in den Biomasse-Mischbehälter 20 möglich, insbesondere auch zur Herstellung eines genau definierten Biomasse-Substratmixes, z. B. aus Gülle und Maissilage, der einen solchen Feststoffanteil aufweist, dass in dem Fermenter 16 ein Gemisch 27 aus Biomasse und Klärschlamm mit dem gewünschten Trockensubstanzgehalt von z. B. 12% aufweist.

Um eine gleichmäßige Verteilung bzw. Vermischung der Biomassecharge und der Klärschlammcharge im Fermenterbehälterinnenraum zu erzielen, umfasst die Biogasanlage 17 ferner noch eine hier lediglich schematisch dargestellte Rühreinrichtung 25, die höhenverstellbar ausgebildet ist und um eine in Vertikalrichtung ausgerichtete Vertikalstange 26 zumindest in Bereichen schwenkbar ist. Dadurch kann ein relativ homogenes Biomasse/Klärschlamm-Gemisch 27 erreicht werden.

Wie dies der Fig. 2 weiter zu entnehmen ist, mündet in das Biomasse/Klärschlamm-Gemisch 27 ferner ein unteres Ende einer Austragsschnecke 28, die mit einem oberen Ende oberhalb des Bodens gelagert ist, so dass das mittels der Austragsschnecke 28 ausgetragene und ausgegorene Biomasse/Klärschlamm-Gemisch verladen und als Dünger auf landwirtschaftlichen Nutzflächen aufgebracht werden kann, da in den Fermenter 16 der Biogasanlage 17 stets eine solche vorgegebene Menge einer eine bestimmte Schadstoffkonzentration aufweisenden Abwasser- und/oder Klärschlammcharge zusammen mit einer vorgegebenen Menge einer Biomassecharge eingebracht und anaerob vergoren wird, mit der sichergestellt ist, dass das ausgegorene Biomasse/Klärschlamm-Gemisch vorgegebene Schadstoffgrenzwerte, z. B. hinsichtlich Schwermetallen und organischen Verunreinigungen, unterschreitet.

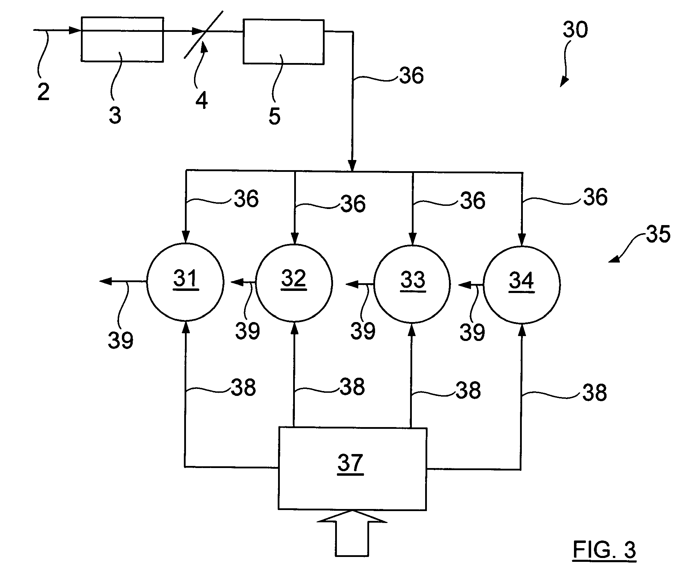

In der Fig. 3 ist schließlich schematisch und beispielhaft ein Fließschema einer alternativen Kläranlage 30 gezeigt, die analog zur Kläranlage der Fig. 1 wiederum einen Abwasserzulauf 2, eine Regenentlastung 3, eine Rechenstation 4 sowie einen Sandfang 5 aufweist. Anders als in der Ausführungsform der Fig. 1 schließt sich hier jedoch an den Sandfang eine Kaskade von mehreren, hier beispielhaft vier parallel geschalteten Fermentern 31, 32, 33, 34 einer Biogasanlage 35 an, die mit dem gesamten aus dem Sandfang 5 abströmenden Abwasser 36 beschickt werden. Die in den einzelnen Fermentern 31, 32, 33, 34 zuzuführenden Abwassermengen können dabei grundsätzlich gleich oder aber auch unterschiedlich sein, was von den jeweils konkret vorhandenen Betriebsbedingungen abhängt. Im hier lediglich beispielhaft gezeigten Fall, ist eine Biomasse-Feststoffspeichereinrichtung 37 gezeigt, aus der heraus zusätzlich zu dem Abwasserstrom 36 jeweils Biomasse-Feststoffe 38 in vorgegebenen Mengen in die einzelnen Fermenter 31, 32, 33, 34 zudosiert werden. Sowohl die Zudosierung des Abwasserstroms 36 als auch des Biomasse-Feststoffstroms 38 in den jeweiligen Fermenterbehälter 31, 32, 33 bzw. 34 hinein laufen bevorzugt so ab, dass in Verbindung mit geeigneten Messvorrichtungen, z. B. Wäge- oder Durchflussmesseinrichtungen, eine genaue und kontrollierte Zudosierung in die Fermenterbehälter hinein möglich ist. Die zudosierten Mengen sind hier ebenfalls wiederum so vorgegeben, dass ein ausgegorenes Abwasser/Biomasse-Gemisch vorgegebene Schadstoffgrenzwerte unterschreitet und somit z. B. als Dünger auf landwirtschaftlichen Nutzflächen ausgebracht werden kann.

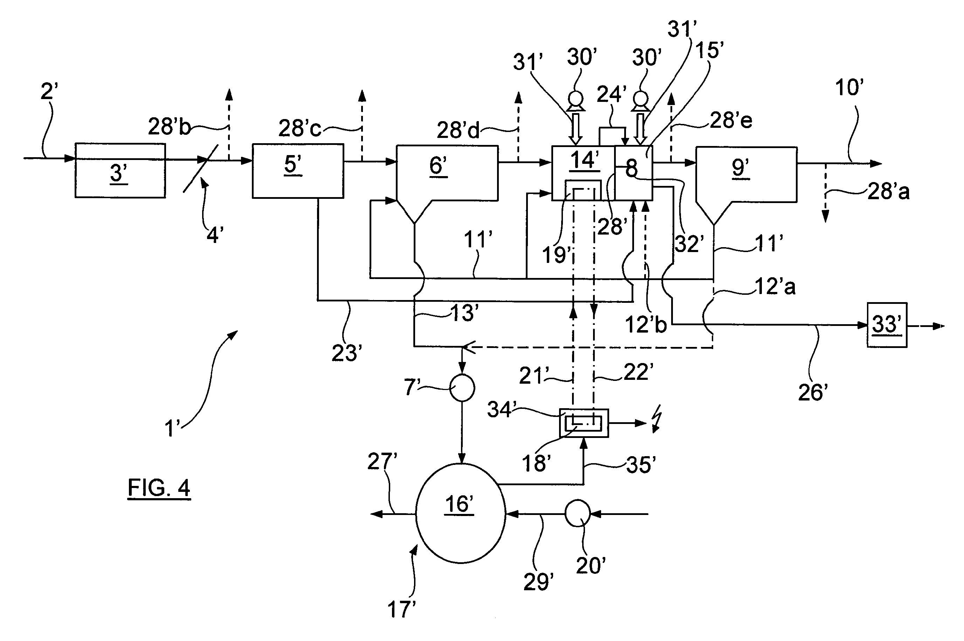

In der Fig. 4 ist eine weitere bevorzugte Ausführungsvariante gezeigt, die einen grundsätzlich gleichen Aufbau mit einer besonders vorteilhaften Sandfangsediment-Aufbereitungsmöglichkeit in Verbindung mit einem Biogasanlagen-Abwärmeeintrag zeigt.

Konkret zeigt Fig. 4 wieder eine Kläranlage 1', die nach einem Abwasserzulauf 2' eine Regenentlastung 3' aufweist. An die Regenentlastung 3' schließt sich eine Rechenstation 4' an.

An die Rechenstation 4' schließt sich wiederum ein Sandfang 5' an, in dem sich die schweren Sinkstoffe, insbesondere Sand, aber auch Steine, Glassplitter etc., als Sandfangsedimente absetzen. Dem Sandfang 5' ist ein Vorklärbecken 6' nachgeschaltet. Der sich im Vorklärbecken 6' absetzende Klärschlamm 13' wird einem Klärschlamm-Speicherbehälter 7' zugeführt, in dem der Klärschlamm 13' zwischengespeichert wird, um diesen dann anschließend einem Fermenter 16' einer Biogasanlage 17' zuzuführen und damit das zuvor bereits genannte ausgegorene Gemisch 27' als z. B. Dünger zu erzeugen.

Dem Vorklärbecken 6' ist eine biologische Reinigungsstufe 8' nachgeschaltet, die ein Belebtschlammbecken mit einem Belebungsbecken 14' aufweist, in dem das Abwasser mit Bakterien- bzw. Belebtschlamm versetzt wird, der wiederum durch ein Gebläse 30' belüftet wird. Dadurch können in dem Belebungsbecken 14' die in dem verunreinigten Abwasser gelösten Verunreinigungen entfernt werden. An das Belebungsbecken 14' schließt sich ais weiterer Bestandteil des Belebtschlammbeckens unmittelbar ein lediglich durch eine Trennwand 28' von dem Belebungsbecken 14' getrenntes Sandfangsediment-Aufbereitungsbecken 15' an, in dem eine hier lediglich symbolisch durch einen Rührflügel 32' dargestellte Misch- und/oder Rühreinrichtung, wie beispielsweise auch ein Trommelmischer, angeordnet ist. Auch dem Sandfangsediment-Aufbereitungsbecken 15' ist ein hier lediglich schematisch dargestelltes Gebläse 30' zugeordnet, mittels ein Frischluftstrom 31' zugeführt werden kann. Dem Belebungsbecken 14' bzw. Sandfangsediment-Aufbereitungsbecken 15' ist in üblicher Weise ein Nachklärbecken 9' nachgeschaltet, in dem der Belebtschlamm durch Absetzen aus dem Abwasser abgetrennt wird, wodurch gereinigtes Wasser 10' vorliegt, das z. B. einem Gewässer, wie z. B. einem Fluss, zugeführt wird. Der im Nachklärbecken 9' abgesetzte Schlamm wird als sog. Rücklaufschlamm 11' hier wieder in Teilströmen zum Belebungsbecken 14' bzw. gegebenenfalls auch zum Vorklärbecken 6' zurückgeführt.

Wie dies in der Fig. 4 strichliert dargestellt ist, kann vom Rücklaufschlamm 11' auch ein Teilstrom 12'a abgezweigt werden, der dann entweder alternativ oder zusätzlich zum Klärschlamm 13' dem Klärschlamm-Speicherbehälter 7' zugeführt und dort eingespeichert werden kann. Dem Klärschlamm-Speicherbehälter 7' kann ferner auch ein Teilstrom 28'a des gereinigten Wassers 10' zugeführt werden, um z. B. eine vorgegebenen Verflüssigung eines Abwasser/Klärschlammgemisches im Klärschlamm-Speicherbehälter 7' zu erreichen. Auch die Zuführung der Abwasserstoffströme 28'b bis 28'e in beliebigen Kombinationen ist grundsätzlich möglich.

Weiterer Bestandteil dieser Kläranlage 1' ist eine Biogasanlage 17', die einen Fermenter 16' aufweist, dem wiederum Biomasse 29' aus einem Biomasse-Speicherbehälter 20' dosiert und chargenweise zugeführt wird. Das im Fermenter 16' erzeugte Gas 35' wird einem Gasmotor 34' der Biogasanlage 17' zugeführt. Diesem Gasmotor 34' ist ein hier lediglich beispielhaft gezeigter erster Wärmetauscher 18' bzw. eine Wärmetauscheranordnung zugeordnet. Ferner ist dem Belebungsbecken 14' ein zweiter Wärmetauscher 19' bzw. eine Wärmetauscheranordnung zugeordnet, die jeweils durch eine Hinleitung 21' und eine Rückleitung 22' miteinander verbunden sind und mittels denen eine Biogasanlagen-Abwärme in das Belebungsbecken 14' so einkoppelbar ist, dass in dem Belebungsbecken 14' eine gegenüber herkömmlichen Belebungsbeckentemperaturen von je nach Jahreszeit durchschnittlich zwischen 9 bis 18°C eine höhere Temperatur eingestellt werden kann, die bevorzugt zwischen 20 bis 30 °C liegen soll. Durch diese höhere Temperatur wird erreicht, dass im Belebungsbecken 14' mittels des Belebtschlammes eine schnellere Reinigung und ein effektiverer Abbau der Verunreinigungen erfolgt, so dass "überschüssiger" Belebtschlamm 24', z. B. mittels einer Pumpeinrichtung, aus dem Belebungsbecken 14' heraus in vorgegebenen Mengen chargenweise in ein Sandfangsediment-Aufbereitungsbecken 15' zudosiert werden kann, in das gleichzeitig Sandfangsediment 23', ebenfalls mittels geeigneter Pump- und/oder Austragseinrichtungen, in vorgegebenen Mengen chargenweise in das Sandfangsediment-Aufbereitungsbecken 15' eingebracht und zudosiert wird. Dieses Gemisch aus Belebtschlamm 24' und Sandfangsediment 23' wird dann mittels der Rühr- und/oder Mischeinrichtung 29' für eine bestimmte vorgegebene Verweilzeit so lange durchmischt und aerob vergoren bis das Sandfangsediment eine gewünschte Aufbereitungsqualität aufweist. Anschließend wird dann das so aufbereitete Sandfangsediment 26' mittels geeigneter Austragseinrichtungen aus dem Sandfangsediment-Aufbereitungsbecken 15' ausgebracht und vorzugsweise gewaschen und separiert, um die Wertstoffe, wie z. B. reinen Sand, herauszuholen und einer Wiederverwertung zuzuführen. Eine Wasch- und Separierstation ist hier mit dem Bezugszeichen 33' bezeichnet.

Wie dies der Fig. 4 weiter entnommen werden kann, kann dem Sandfangsediment-Aufbereitungsbecken 15' alternativ oder zusätzlich zum Belebtschlamm 24' aus dem Belebungsbecken 14' auch ein Rücklaufschlamm 12'b als aus dem Nachklärbecken 9' abgezogener Belebtschlamm in vorgegebenen Mengendosierungen, insbesondere gewichtsgesteuert, zugeführt werden.

## Patentansprüche

1. Verfahren zur Aufbereitung von verunreinigtem Abwasser, insbesondere zur Verwertung von Klärschlamm aus Kläranlagen, bei dem das einer Kläranlage, insbesondere einer kommunalen Kläranlage, zugeführte und verunreinigte Abwasser einer mechanischen Reinigungsstation, insbesondere einer Rechenstation der Kläranlage zugeführt wird,
**dadurch gekennzeichnet,**
**dass** der mechanischen Reinigungsstation (4) wenigstens ein Fermenter (16; 31, 32, 33, 34) einer Biogasanlage (17; 35) nachgeschaltet ist, in den eine vorgegebene Menge einer stromab der Reinigungsstation (4) abgezogenen Abwasser- und/oder Klärschlammcharge (12, 13, 28; 36) zusammen mit einer vorgegebenen Menge einer Biomassecharge, insbesondere einer Biomasse-Feststoffcharge (29; 38), aus pflanzlichen und/oder tierischen Abfällen und/oder nachwachsenden Rohstoffen eingebracht und dort anaerob vergoren wird, und
**dass** die Menge und Zusammensetzung der Abwasser- und/oder Klärschlammcharge (12, 13, 28; 36) einerseits und der Biomassecharge (29; 38) andererseits in Abhängigkeit von der Schadstoffkonzentration der Abwasser- und/oder Klärschlammcharge (12, 13, 28; 36) so vorgegeben wird, dass das ausgegorene Gemisch (27) aus Abwasser und/oder Klärschlamm einerseits sowie Biomasse andererseits vorgegebene Schadstoffgrenzwerte unterschreitet.

2. Verfahren nach Anspruch 1, **dadurch gekennzeichnet,**
**dass** der durch eine Rechenstation (4) gebildeten mechanischen Reinigungsstation ein Sandfang (5) nachgeschaltet ist, und
**dass** der Fermenter (16; 31, 32, 33, 34) dem Sandfang (5) nachgeschaltet ist.

3. Verfahren nach Anspruch 1 oder 2, **dadurch gekennzeichnet, dass** die Zudosierung der Abwasser- und/oder Klärschlammcharge (12, 13, 28; 36) einerseits und der Biomasse-Feststoffcharge (29; 38) andererseits so vorgegeben wird, dass in dem Fermenter (16; 31 bis 34) ein Gemisch mit einem Trockensubstanzgehalt von kleiner als 20%, vorzugsweise von kleiner 15%, höchst bevorzugt mit einem zwischen 8 bis 15% liegenden Trockensubstanzgehalt vorliegt.

4. Verfahren nach einem der Ansprüche 1 bis 3, **dadurch gekennzeichnet, dass** wenigstens ein Teilstrom (28; 36) des nach der mechanischen Reinigungsstation, insbesondere Rechenstation (4) oder nach einem Sandfang (5) anfallenden, mechanisch vorgereinigten Abwassers in den wenigstens einen Fermenter (16; 31 bis 34) der Biogasanlage (17; 35) eingebracht wird.

5. Verfahren nach Anspruch 4, **dadurch gekennzeichnet, dass** das gesamte nach der mechanischen Reinigungsstation, insbesondere Rechenstation (4) oder dem Sandfang (5) anfallende, mechanisch vorgereinigte Abwasser (36) in den wenigstens einen Fermenter (31, 32, 33, 34) eingebracht wird, insbesondere unter Zwischenschaltung wenigstens eines Zwischenspeichers, aus dem heraus das vorgereinigte Abwasser dem wenigstens einen Fermenter mittels einer Zuführeinrichtung, vorzugsweise einer Pumpeinrichtung, zudosiert wird.

6. Verfahren nach einem der Ansprüche 1 bis 4, **dadurch gekennzeichnet, dass** der mechanischen Reinigungsstation, insbesondere Rechenstation (4) oder dem Sandfang (5) wenigstens ein Klärbecken nachgeschaltet ist dergestalt, dass dem wenigstens einen Fermenter (16) eine vorgegebene Menge an Klärschlamm (13) aus dem wenigstens einen Klärbecken, insbesondere aus einem Vorklärbecken (6) und/oder einem Belebungsbecken (8) und/oder einem Nachklärbecken (9), zugeführt wird.

7. Verfahren nach Anspruch 6, **dadurch gekennzeichnet, dass** dem wenigstens einen Fermenter (16) zusätzlich zum Klärschlamm (13) eine vorgegebene Menge einer vorgegebenen Flüssigkeit, insbesondere mechanisch vorgereinigtes Abwasser (28b bis 28 e) und/oder biologisch vor- bzw. endgereinigtes Abwasser (28a), zugeführt wird.

8. Verfahren nach Anspruch 7, **dadurch gekennzeichnet, dass** die zusätzliche Flüssigkeit (28a bis 28 e) mit dem Klärschlamm (13) entsprechend vorgegebener Parameter vor dem Fermenter (16) vermischt und anschließend in diesen entsprechend vorgegebener Zudosierparameter zudosiert wird.

9. Verfahren nach einem der Ansprüche 6 bis 8, **dadurch gekennzeichnet, dass** dem Fermenter (16) eine Klärschlamm-Speichereinrichtung (7), insbesondere für Klärschlamm (12, 13) aus der Kläranlage (1) sowie gegebenenfalls für eine zusätzliche Flüssigkeit (28a) vorgeschaltet ist, aus der heraus die vorgegebene Klärschlammmenge mittels einer Zuführeinrichtung (18) dem Fermenter (16) zudosiert wird.

10. Verfahren nach Anspruch 9, **dadurch gekennzeichnet, dass** die Klärschlamm-Speichereinrichtung (7) durch wenigstens einen benachbart zum Fermenter (16) der Biogasanlage (17) angeordneten gas- und flüssigkeitsdichten Klärschlamm-Speicherbehälter als Zwischenspeicher gebildet ist, aus dem heraus die Abwasser- und/oder Klärschlammcharge (13) mittels einer Pumpeinrichtung (18) in den Fermenter (16) gepumpt wird.

11. Verfahren nach Anspruch 10, **dadurch gekennzeichnet, dass** der Klärschlamm-Speicherbehälter (7) mit einer Durchflussmesseinrichtung und/oder einer Volumenmesseinrichtung und/oder einer Wägeeinrichtung (15) gekoppelt ist, mittels der die in den Klärschlamm-Speicherbehälter (7) hinein und/oder die aus diesem abgezogene Menge der Abwasser- und/oder Klärschlammcharge (13) bestimmt wird.

12. Verfahren nach Anspruch 10 oder Anspruch 11, **dadurch gekennzeichnet, dass** in dem Klärschlamm-Speicherbehälter (7) wenigstens eine Rühreinrichtung (14) angeordnet ist, mittels der vor dem Abziehen der Abwasser- und/oder Klärschlammcharge (13) der Behälterinhalt für eine vorgegebene Zeitdauer gemischt und gerührt wird.

13. Verfahren nach einem der Ansprüche 1 bis 12, **dadurch gekennzeichnet, dass** eine Biomasse-Speichereinrichtung (20) als Zwischenspeicher vorgesehen ist, aus der heraus die vorgegebene Biomasse-Feststoffmenge mittels einer Zuführeinrichtung (23, 24) dem Fermenter (16) zudosiert wird.

14. Verfahren nach Anspruch 13, **dadurch gekennzeichnet, dass** die Biomasse-Speichereinrichtung (20) mit einer Wägeeinrichtung (22) gekoppelt ist, mittels der die in die Biomasse-Speichereinrichtung (20) zudosierte und/oder aus dieser abgezogene Menge der Biomasse-Feststoffcharge insbesondere in Verbindung mit einer Steuereinrichtung bestimmt wird.

15. Verfahren nach Anspruch 13 oder Anspruch 14, **dadurch gekennzeichnet, dass** in der Biomasse-Speichereinrichtung (20) wenigstens eine Mischeinrichtung (21) angeordnet ist, mittels der die Biomasse-Feststoffe durchmischt werden.

16. Verfahren nach einem der Ansprüche 1 bis 15, **dadurch gekennzeichnet, dass** die Biomasse-Feststoffe durch Rinder- und/oder Schwein- und/oder Hühnermist und/oder Biertreber und/oder Melasse und/oder Apfeltrester und/oder Obsttrester und/oder Rebentrester und/oder Rüben und/oder Ganzpflanzensilagen und/oder Grassilagen und/oder Maissilagen gebildet werden.

17. Verfahren nach einem der Ansprüche 1 bis 16, **dadurch gekennzeichnet, dass** eine Austragseinrichtung (28), insbesondere eine Austragsschnecke vorgesehen ist, mittels der das ausgegorene Gemisch (27) aus dem Fermenter (16) ausgetragen wird.

18. Verfahren nach einem der Ansprüche 1 bis 17, **dadurch gekennzeichnet,**
**dass** sich in einem Sandfang (5') schwere Sinkstoffe als Sandfangsedimente absetzen, und
**dass** die Kläranlage (1') ferner wenigstens einen Sandfangsediment-Aufbereitungsbehälter (15') aufweist, in den eine vorgegebenen Menge der im Sandfang (5') anfallenden Sandfangsedimente (23') zusammen mit einer vorgegebenen Menge an sedimentspezifischen Bakterien (12'b, 24'), insbesondere aerobe Bakterien, für eine vorgegebene Verweilzeit zur biologischen Aufbereitung des Sandfangsedimentes (23') eingebracht, insbesondere chargenweise eingebracht wird.

19. Verfahren nach Anspruch 18, **dadurch gekennzeichnet,**
**dass** in einer dem Sandfang (5') nachgeschalteten Belebtschlamm-Reinigungsstufe (8') Verunreinigungen des Abwassers mittels Belebtschlamm biologisch abgebaut werden, und
**dass** als sedimentspezifische Bakterien eine vorgegebene Menge an Belebtschlamm (12'b, 24') aus der Belebtschlamm-Reinigungsstufe (8'), insbesondere aus einem Belebtschlammbecken (14') und/oder einem dem Belebtschlammbecken (14') zugeordneten und nachgeschalteten Nachklärbecken (9'), zudosiert wird.

20. Verfahren nach Anspruch 18 oder 19, **dadurch gekennzeichnet, dass** in dem Sandfangsediment-Aufbereitungsbehälter (15') wenigstens eine Misch- und/oder Rühreinrichtung (32') angeordnet ist, mittels dem das Sandfangsediment/Bakterien-Gemisch durchmischt wird.

21. Verfahren nach einem der Ansprüche 18 bis 20, **dadurch gekennzeichnet, dass** dem Sandfangsediment-Aufbereitungsbehälter (15') eine Austragseinrichtung, insbesondere eine Austragsschnecke, zugeordnet ist, mittels der das ausgegorene Gemisch (26') aus dem Sandfangsediment-Aufbereitungsbehälter (15') ausgetragen wird.

22. Verfahren nach einem der Ansprüche 18 bis 21, **dadurch gekennzeichnet, dass** dem Sandfangsediment-Aufbereitungsbehälter (15') eine Belüftungs- und/oder Gebläseeinrichtung (30') zugeordnet ist, mittels der dem Aufbereitungsbehälter Frischluft (31') für die aerobe Vergärung zugeführt wird.

23. Verfahren nach einem der Ansprüche 19 bis 22, **dadurch gekennzeichnet, dass** die Belebtschlamm-Reinigungsstufe (8') wenigstens eine einem Belebtschlammbecken (14') und/oder einem Nachklärbecken (9') zugeordnete und vorzugsweise mit einer Messeinrichtung gekoppelte Zudosiereinrichtung, insbesondere Pumpeinrichtung, aufweist, mittels der eine vorgegebene Menge des im Beiebischlammbecken (14') und/oder in einem Nachklärbecken (9') vorhandenen bzw. anfallenden Belebtschlammes (12'b, 24') in den Sandfangsediement-Aufbereitungsbehälter (15'), insbesondere gesteuert mittels einer Steuereinrichtung, zudosiert wird.

24. Verfahren nach einem der Ansprüche 18 bis 23, **dadurch gekennzeichnet, dass** dem Sandfang (5') wenigstens eine vorzugsweise mit einer Messeinrichtung gekoppelte Zudosiereinrichtung, insbesondere eine Pump- und/oder Austragseinrichtung, zugeordnet ist, mittels der eine vorgegebene Menge des im Sandfang (5') anfallenden Sandfangsedimentes (23') in den Sandfangsediment-Aufbereitungsbehälter (15'), insbesondere gesteuert mittels einer Steuereinrichtung, zudosiert wird.

25. Verfahren, insbesondere nach einem der Ansprüche 18 bis 24, **dadurch gekennzeichnet, dass** wenigstens ein Teil einer aus der Biogasanlage (17') ausgekoppelten Abwärme als Biogasanlagen-Abwärme in ein Belebtschlammbecken (14') und/oder den Sandfangsediment-Auffangbehälter (15) der biologischen Reinigungsstufe (8') eingekoppelt wird dergestalt, dass insbesondere im Belebtschlammbecken (14') eine vorgegebene Temperatur eingestellt wird.

26. Verfahren nach Anspruch 25, **dadurch gekennzeichnet, dass** die Kläranlage (1') eine Regelungseinrichtung aufweist, mittels der die Temperatur im Belebtschlammbecken (14') geregelt wird, wobei im Bereich des Belebtschlammbeckens (14') eine Messfühlereinrichtung zur Istwerterfassung angeordnet und als Regelstrecke eine Heizeinrichtung (18', 19') vorgesehen ist, mittels der die Biogasanlagen-Abwärme aus der Biogasanlage (17'), vorzugsweise von wenigstens einem Gasmotor, ausgekoppelt und in das Belebtschlammbecken (14') eingekoppelt wird.

27. Vorrichtung zur Aufbereitung von verunreinigtem Abwasser, insbesondere zur Verwertung von Kiärschiamm aus Kläranlagen, insbesondere nach einem der Ansprüche 1 bis 26,
mit einer einen Abwasserzulauf aufweisenden Kläranlage, insbesondere einer kommunalen Kläranlage, der eine mechanische Reinigungsstation, insbesondere eine Rechenstation nachgeschaltet ist,
**dadurch gekennzeichnet,**
**dass** der mechanischen Reinigungsstation (4) wenigstens ein Fermenter (16; 31, 32, 33, 34) einer Biogasanlage (17; 35) nachgeschaltet ist, in den eine vorgegebene Menge einer stromab der mechanischen Reinigungsstation (4) abgezogenen Abwasser- und/oder Klärschlammcharge (12, 13, 28; 36) zusammen mit einer vorgegebenen Menge einer Biomassecharge, insbesondere einer Biomasse-Feststoffcharge (29; 38), aus pflanzlichen und/oder tierischen Abfällen und/oder nachwachsenden Rohstoffen zur anaeroben Vergärung einbringbar ist, und
**dass** die Menge und Zusammensetzung der Abwasser- und/oder Klärschlammcharge (12, 13, 28; 36) einerseits und der Biomassecharge (29; 38) andererseits in Abhängigkeit von der Schadstoffkonzentration der Abwasser- und/oder Klärschlammcharge (12, 13, 28; 36) so vorgegeben ist, dass das ausgegorene Gemisch (27) aus Abwasser und/oder Klärschlamm einerseits sowie Biomasse andererseits vorgegebene Schadstoffgrenzwerte unterschreitet.

28. Vorrichtung nach Anspruch 27, **dadurch gekennzeichnet,**
**dass** der mechanischen Reinigungsstation, insbesondere der Rechenstation (4) ein Sandfang (5) nachgeschaltet ist, und
**dass** der Fermenter (16; 31, 32, 33, 34) dem Sandfang (5) nachgeschaltet ist.

29. Vorrichtung nach Anspruch 28, **dadurch gekennzeichnet, dass** der mechanischen Reinigungsstation, insbesondere der Rechenstation (4), oder dem Sandfang (5) der Kläranlage wenigstens ein Fermenter (31, 32, 33, 34) so nachgeschaltet ist, dass das gesamte vorgereinigte Abwasser (36) in diesen einbringbar ist, insbesondere unter Zwischenschaltung wenigstens eines Zwischenspeichers, aus dem heraus das vorgereinigte Abwasser dem wenigstens einen Fermenter (31, 32, 33, 34) mittels einer Zuführeinrichtung, vorzugsweise mittels einer Pumpeinrichtung, zudosierbar ist.

30. Vorrichtung nach Anspruch 28, **dadurch gekennzeichnet,**
**dass** der mechanischen Reinigungsstation, insbesondere der Rechenstation (4) wenigstens ein Klärbecken nachgeschaltet ist, und
**dass** dem wenigstens einen Fermenter (16) eine vorgegebene Menge an Klärschlamm (13) aus dem wenigstens einen Klärbecken, insbesondere aus einem Vorklärbecken (6) und/oder einem Belebungsbecken (8) und/oder einem Nachklärbecken (9), zuführbar ist.

31. Vorrichtung nach Anspruch 30, **dadurch gekennzeichnet, dass** dem wenigstens einen Fermenter (16) zusätzlich zum Klärschlamm (13) eine vorgegebene Menge einer vorgegebenen Flüssigkeit, insbesondere mechanisch vorgereinigtes Abwasser (28b bis 28 e) und/oder biologisch vor- bzw. endgereinigtes Abwasser (28a), zuführbar ist.

32. Vorrichtung nach Anspruch 30 oder 31, **dadurch gekennzeichnet, dass** dem Fermenter (16) eine Klärschlamm-Speichereinrichtung (7), insbesondere für Klärschlamm (12, 13) aus der Kläranlage (1) sowie gegebenenfalls für eine zusätzliche Flüssigkeit (28a) vorgeschaltet ist, aus der heraus die vorgegebene Klärschlammmenge mittels einer Zuführeinrichtung (18) dem Fermenter (16) zudosierbar ist.

33. Vorrichtung nach Anspruch 32, **dadurch gekennzeichnet, dass** die Klärschlamm-Speichereinrichtung (7) durch wenigstens einen benachbart zum Fermenter (16) der Biogasanlage (17) angeordneten gas- und flüssigkeitsdichten Klärschlamm-Speicherbehälter als Zwischenspeicher gebildet ist, aus dem heraus die Abwasser- und/oder Klärschlammcharge (13) mittels einer Pumpeinrichtung (18) in den Fermenter (16) pumpbar ist.

34. Vorrichtung nach Anspruch 33, **dadurch gekennzeichnet, dass** der Klärschlamm-Speicherbehälter (7) mit einer Durchflussmesseinrichtung und/oder einer Volumenmesseinrichtung und/oder einer Wägeeinrichtung (15) gekoppelt ist, mittels der die in den Klärschlamm-Speicherbehälter (7) hinein und/oder die aus diesem abgezogene Menge der Abwasser- und/oder Klärschlammcharge (13) bestimmt wird.

35. Vorrichtung nach Anspruch 33 oder Anspruch 34, **dadurch gekennzeichnet, dass** in dem Klärschlamm-Speicherbehälter (7) wenigstens eine Rühreinrichtung (14) angeordnet ist, mittels der vor dem Abziehen der Abwasser- und/oder Klärschlammcharge (13) der Behälterinhalt für eine vorgegebene Zeitdauer gemischt und gerührt wird.

36. Vorrichtung nach einem der Ansprüche 27 bis 35, **dadurch gekennzeichnet, dass** eine Biomasse-Speichereinrichtung (20) als Zwischenspeicher vorgesehen ist, aus der heraus die vorgegebene Biomasse-Feststoffmenge mittels einer Zuführeinrichtung (23, 24) dem Fermenter (16) zudosierbar ist.

37. Vorrichtung nach Anspruch 36, **dadurch gekennzeichnet, dass** die Biomasse-Speichereinrichtung (20) mit einer Wägeeinrichtung (22) gekoppelt ist, mittels der die in die Biomasse-Speichereinrichtung (20) zudosierte und/oder aus dieser abgezogene Menge der Biomasse-Feststoffcharge bestimmbar ist.

38. Vorrichtung nach Anspruch 36 oder Anspruch 37, **dadurch gekennzeichnet, dass** in der Biomasse-Speichereinrichtung (20) wenigstens eine Mischeinrichtung (21) angeordnet ist, mittels der die Biomasse-Feststoffe durchmischbar sind.

39. Vorrichtung nach einem der Ansprüche 27 bis 38, **dadurch gekennzeichnet, dass** die Biomasse-Feststoffe durch Rinder- und/oder Schwein- und/oder Hühnermist und/oder Biertreber und/oder Melasse und/oder Apfeltrester und/oder Obsttrester und/oder Rebentrester und/oder Rüben und/oder Ganzpflanzensilagen und/oder Grassilagen und/oder Maissilagen gebildet sind.

40. Vorrichtung nach einem der Ansprüche 27 bis 39, **dadurch gekennzeichnet, dass** eine Austragseinrichtung (28), insbesondere eine Austragsschnecke vorgesehen ist, mittels der das ausgegorene Gemisch (27) aus dem Fermenter (16) austragbar ist.

41. Vorrichtung nach einem der Ansprüche 27 bis 40, **dadurch gekennzeichnet,**
**dass** die Kläranlage (1) einen Sandfang (5') aufweist, in dem sich schwere Sinkstoffe als Sandfangsediment absetzen,
**dass** die Kläranlage (1') ferner wenigstens einen Sandfangsediment-Aufbereitungsbehälter (15') aufweist, in den eine vorgegebenen Menge der im Sandfang (5') anfallenden Sandfangsedimente (23') zusammen mit einer vorgegebenen Menge an sedimenispezifischeri Bakterien (12'b, 24'), insbesondere aerobe Bakterien, für eine vorgegebene Verweilzeit zur biologischen Aufbereitung des Sandfangsedimentes (23') einbringbar ist.

42. Vorrichtung nach Anspruch 41, **dadurch gekennzeichnet,**
**dass** die Kläranlage (1') eine dem Sandfang (5') nachgeschaltete Belebtschlamm-Reinigungsstufe (8') aufweist, in der Verunreinigungen des Abwassers mittels Belebtschlamm biologisch abbaubar sind, und
**dass** die sedimentspezifischen Bakterien durch Belebtschlamm (12'b, 24') aus der Belebtschlamm-Reinigungsstufe (8'), insbesondere aus einem Belebtschlammbecken (14') und/oder einem dem Belebtschlammbecken zugeordneten und nachgeschalteten Nachklärbecken (9'), gebildet sind.

43. Vorrichtung nach Anspruch 41 oder 42, **dadurch gekennzeichnet, dass** der Sandfangsediment-Aufbereitungsbehälter (15') durch ein mittels wenigstens einer Trennwand (28') von einem Belebungsbecken getrenntes Aufbereitungsbecken eines Belebtschlammbeckens (14') gebildet ist.

44. Vorrichtung nach einem der Ansprüche 41 bis 43, **dadurch gekennzeichnet, dass** in dem Sandfangsediment-Aufbereitungsbehälter (15') wenigstens eine Misch- und/oder Rühreinrichtung (32') angeordnet ist, mittels dem das Sandfangsediment/Bakterien-Gemisch durchmischbar ist.

45. Vorrichtung nach Anspruch 44, **dadurch gekennzeichnet, dass** die Misch- und/oder Rühreinrichtung durch ein Rührwerk (32') gebildet ist, insbesondere ein hydraulisch oder pneumatisch betriebenes Rührwerk.

46. Vorrichtung nach einem der Ansprüche 41 bis 45, **dadurch gekennzeichnet,**
**dass** dem Sandfangsediment-Aufbereitungsbehälter (15') eine Austragseinrichtung, insbesondere eine Austragsschnecke, zugeordnet ist, mittels der das sich im Sandfangsediment-Aufbereitungsbehälter (15') absetzende und aufbereitete Sandfangsediment (26') austragbar ist, und
**dass** dem Sandfangsediment-Aufbereitungsbehälter (30') eine Wasch- und/oder Separierstation (33') nachgeschaltet ist.

47. Vorrichtung nach einem der Ansprüche 41 bis 46, **dadurch gekennzeichnet, dass** dem Sandfangsediment-Aufbereitungsbehälter (15') eine Belüftungs- und/oder Gebläseeinrichtung (30') zugeordnet ist, mittels der dem Sandfangsediment-Aufbereitungsbehälter (15') Luft (31') für die aerobe Vergärung zuführbar ist.

48. Vorrichtung nach einem der Ansprüche 42 bis 46, **dadurch gekennzeichnet, dass** die Belebtschlamm-Reinigungsstufe (8') wenigstens eine einem Belebtschlammbecken (14') und/oder einem Nachklärbecken (9') zugeordnete und vorzugsweise mit einer Messeinrichtung gekoppelte Zudosiereinrichtung, insbesondere Pumpeinrichtung, aufweist, mittels der eine vorgegebene Menge des im Belebtschlammbecken (14') und/oder in einem Nachklärbecken (9') vorhandenen bzw. anfallenden Belebtschlammes (12'b, 24') in den Sandfangsediment-Aufbereitungsbehälter (15'), insbesondere gesteuert mittels einer Steuereinrichtung, zudosierbar ist.

49. Vorrichtung nach einem der Ansprüche 41 bis 48, **dadurch gekennzeichnet, dass** dem Sandfang (5') wenigstens eine vorzugsweise mit einer Messeinrichtung gekoppelte Zudosiereinrichtung, insbesondere eine Pump- und/oder Austragseinrichtung, zugeordnet ist, mittels der eine vorgegebene Menge des im Sandfang (5') anfallenden Sandfangsedimentes (23') in den Sandfangsediment-Aufbereitungsbehälter (15'), insbesondere gesteuert mittels einer Steuereinrichtung, zudosierbar ist.

50. Vorrichtung, insbesondere nach einem der Ansprüche 42 bis 49, **dadurch gekennzeichnet, dass** wenigstens ein Teil der Abwärme der Biogasanlage (17') als Biogasanlagen-Abwärme in ein Belebtschlammbecken (14') und/oder in den Sandfangsediment-Aufbereitungsbehälter (15') der biologischen Reinigungsstufe (8') einkoppelbar ist dergestalt, dass insbesondere im Belebtschlammbecken (14') eine vorgegebene Temperatur einstellbar ist.

51. Vorrichtung nach Anspruch 50, **dadurch gekennzeichnet, dass** die Kläranlage (1') eine Regelungseinrichtung aufweist, mittels der die Temperatur im Belebtschlammbecken (14') regelbar ist, wobei im Bereich des Belebtschlammbeckens (14') eine Messfühlereinrichtung zur Istwerterfassung angeordnet und als Regelstrecke eine Heizeinrichtung (18', 19') vorgesehen ist, mittels der die Biogasanlagen-Abwärme aus der Biogasanlage (17') auskoppelbar und in das Belebtschlammbecken (14') einkoppelbar ist.

52. Vorrichtung nach Anspruch 50 oder Anspruch 51, **dadurch gekennzeichnet, dass** zur Einkopplung der Biogasanlagen-Abwärme eine Wärmetauscheranordnung (18', 19') vorgesehen ist, die einen biogasanlagenbehälterseitigen ersten Wärmetauscher (18'), mittels dem ein Wärmetauschmedium Wärme von der Biogasanlage (17') aufnimmt, und einen belebtschlammbeckenseitigen zweiten Wärmetauscher (19') aufweist, mittels dem das Wärmetauschmedium Wärme an das Belebtschlammbecken (14') abgibt.
